# EUROPEAN PATENT APPLICATION

(11) **EP 4 302 589 A1**
(43) Date of publication of application: **10.01.2024**
(21) Application number: 23183446.6
(22) Date of filing: 04.07.2023
(51) Int. Cl.: A01D 41/14, A01D 57/20

(54) **BELT SUPPORT FOR DRAPER HEADER OF AGRICULTURAL VEHICLE**

(30) Priority: 05.07.2022 US 202217857299
(71) Applicant: CNH Industrial America LLC, New Holland, PA 17557 (US)
(72) Inventor: FREDRICKS, Eric, New Holland, 17557 (US); THOMAS, Jeffrey, New Holland, 17557 (US); WOELFLING, Joseph Russell, New Holland, 17557 (US)
(74) Representative: Keltie LLP

(57) **Abstract**

A header (112) for an agricultural vehicle (100) includes a frame (126) and a plurality of supports (132). Each support (132) extends from a respective proximal end at the frame (126) to a respective distal end located forward of the frame (126). The header (112) further comprises a channel (502, 602, 703, 804, 1002, 1102) that is either formed on or mounted to at least one of the supports (132), and a belt (118, 918) positioned over and on the plurality of supports (132). The belt (118, 918) defines a projection (501, 601, 901, 1001, 1101) that is positioned within the channel (502, 602, 703, 804, 1002, 1102) in order to constrain the belt (118, 918) in a fore to aft direction of the header (112).

## Description

### FIELD OF THE INVENTION

This invention is generally directed to a support system for a belt of a draper header of an agricultural vehicle, such as a combine harvester.

### BACKGROUND OF THE INVENTION

As described in U.S. Patent App. Pub. No. 2021/0112713, agricultural equipment, such as combines, swathers and windrowers, typically include a header that is movably attached to the chassis of the vehicle. The header typically is located at the front of the vehicle, and extends laterally relative to the vehicle's forward direction of travel. The header includes a center section located along the vehicle fore-aft centerline, and a wing section attached at, and extending laterally from, each lateral end of the center section. In some cases, the header is a single rigid body in which the wing sections are rigidly connected to the center section. In other cases the header is a so-called articulated header in which the wing sections can move independently with respect to the center section. Devices such as hydraulic or pneumatic cylinders, mechanical linkages, and the like, may be provided to selectively control the heights of the center section and the wing sections of the articulated header.

During operation, the header might be raised or lowered to account for variations in the ground level, properties of the particular crop being harvested, and various other operating conditions. Thus, a typical header might be pivotally mounted to the vehicle chassis by way of a feeder housing. More specifically, the feeder housing might be pivotally mounted to the vehicle chassis at its proximal end, and rigidly connected to the frame of the header at its distal end. Height of the header is controlled via hydraulic cylinders, which move the feeder housing up and down about the pivot connection at the chassis. It is also known to provide additional position controls. For example, the foregoing system may be supplemented with a tilt adjust mechanism that pivots portions of the header forward and backward relative to the feeder housing. Other header position control might be provided by mounting portions of the header, such as cutter bars, on movable supports, which might allow the cutter bar to flex to conform to irregular ground.

A header having height and tilt adjust mechanisms such as described above may be operated by actively raising and lowering the header to account for undulations in the ground, while the cutter bar flexes up and down on support arms to track the local shape of the ground below each support arm.

Other systems are also known in the art. For example, U.S. Patent Pub. No. 2019/0029175 describes a header having a cutter bar (17) mounted to the feeder housing by a multi-bar linkage, with suspension springs (24) to allow the cutter bar to float, and a tilt-control actuator (26) to change the orientation of the cutter bar. A similar arrangement is shown in U.S. Pat. No. 7,207,164, in which the header includes a cutter bar subframe (52) that floats on a subframe (64) on lower and upper links (66, 68). Another similar arrangement is shown in U.S. Pat. No. 5,633,452, which shows the main body of the header (30) being mounted on and upper link (46) and a lower link (40). In each of the foregoing examples, the entire mass of the forward portion of the header moves up and down according to the geometry of the upper and lower links when traveling over undulations.

In all or most these systems, belts are wrapped around the respective wing sections of the header. Motors or other devices rotate the belts in an endless loop to bring crop material toward the center section. A belt may also be wrapped about the center section, and rotated using a motor, to deliver crop material from the header to a feederhouse of the vehicle.

The belts wrapped around the wing sections may tend to inadvertently shift in the fore-aft direction during operation. It is also conceivable that the belt wrapped around the center section could shift in the transverse direction during operation. Thus, it would be beneficial to either prevent or limit the tendency of the belts to shift.

This description of the background is provided to assist with an understanding of the following explanations of exemplary embodiments, and is not an admission that any or all of this background information is necessarily prior art.

### SUMMARY OF THE INVENTION

In one exemplary aspect, a header for an agricultural vehicle includes a frame; a plurality of supports, each of the plurality of supports extending from a respective proximal end at the frame to a respective distal end located forward of the frame; a channel that is either formed on or mounted to at least one of the supports; and a belt positioned over and on the plurality of supports. The belt defining a projection that is positioned within the channel in order to constrain the belt in a fore to aft direction of the header.

### BRIEF DESCRIPTION OF THE DRAWINGS

Embodiments of inventions will now be described, strictly by way of example, with reference to the accompanying drawings, in which:
FIG. 1 is a side view of an agricultural combine.
FIG. 2 is an isometric view of a header of the combine.
FIG. 3 is an isometric view of a portion of a header frame of the header.
FIG. 4 is a side view of a header illustrating a header suspension of the header.
FIG. 5 is a cross-sectional view of the header of FIG. 2 taken along the lines 5-5, and according to a first exemplary embodiment of the invention.
FIG. 6 depicts an alternative belt support design according to a second exemplary embodiment of the invention.
FIG. 7 depicts an alternative belt support design according to a third exemplary embodiment of the invention.
FIG. 8 depicts an alternative belt support design according to a fourth exemplary embodiment of the invention.
FIG. 9 depicts an alternative belt support design according to a fifth exemplary embodiment of the invention.
FIG. 10 depicts an alternative belt support design according to a sixth exemplary embodiment of the invention.
FIG. 11 depicts an alternative belt support design according to a seventh exemplary embodiment of the invention.

In the figures, like reference numerals refer to the same or similar elements.

### DETAILED DESCRIPTION OF THE DRAWINGS

Exemplary embodiments of the present invention provide suspension systems for headers for agricultural equipment, such as combines, swathers, windrowers, and the like. It will be appreciated that other embodiments may be used in other types of machines having a similar arrangement of parts, upon incorporation of the appropriate features of the inventions herein.

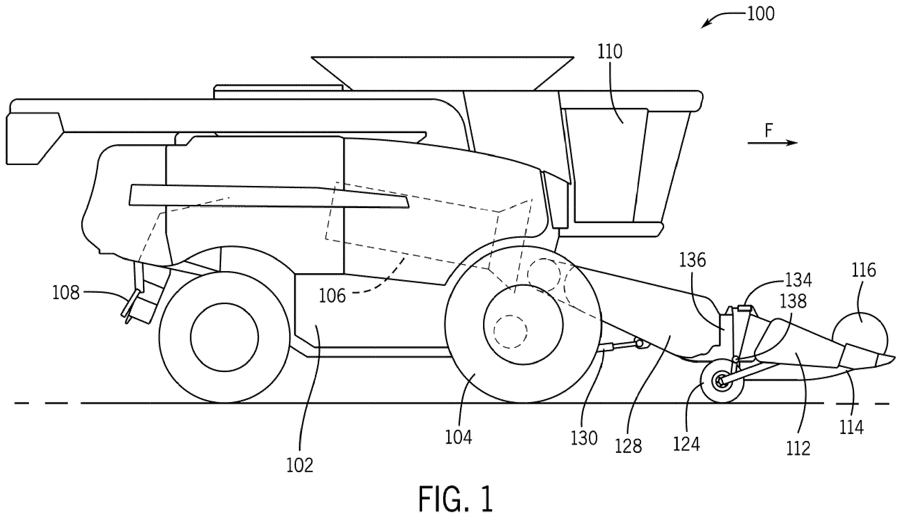

FIG. 1 illustrates an example of an agricultural combine 100, with which embodiments of the invention may be used. The combine 100 includes a chassis 102 that is configured for driving on a surface (e.g., the ground or a road), such as by being supported by pneumatic wheels 104, tracked wheel assemblies, or the like. The combine 100 includes a threshing and separating system 106 mounted on or within the chassis 102. The threshing and separating system 106 may include mechanisms such as one or more threshers (e.g., an axial flow thresher), sieves, blowers, and the like, as well as an associated grain hopper and unloader. Threshing and separating systems 106 and their associated components are well-known in the art, and need not be described in detail herein. The combine 100 also may include other features, such as a spreader 108, operator cab 110, and the like.

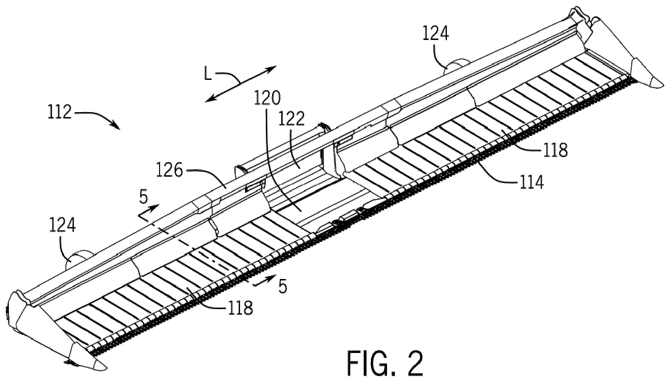

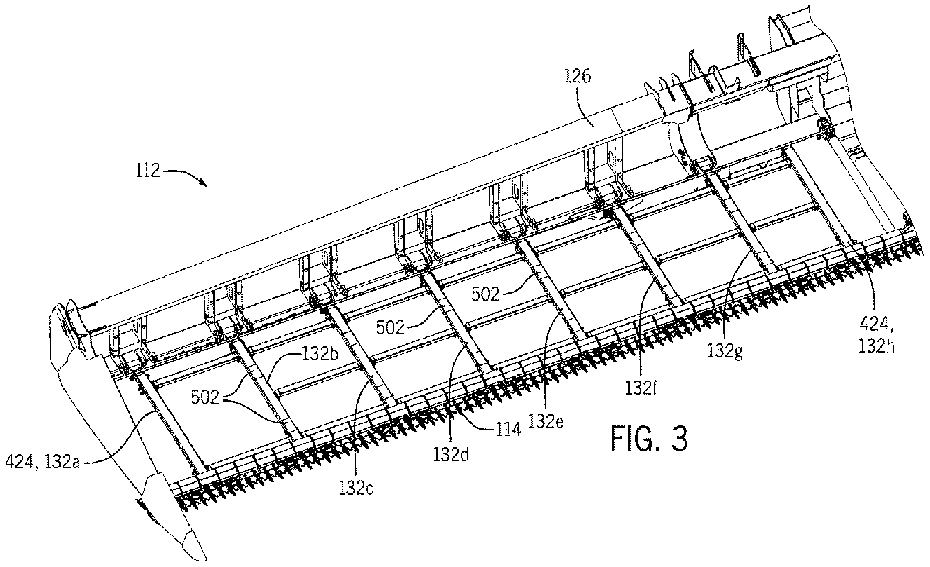

Referring also to FIG. 2 and 3, the combine 100 also includes a header 112, which is configured to cut and harvest crop material from the ground as the combine 100 drives in the forward direction F. For example, the header 112 may include one or more cutter bars 114 located at or near the leading edge of the header 112 to cut crops at or near the ground level, and one or more reels 116 configured to pull the crop material backwards towards the header 112. The header 112 includes belts 118 that are configured to move the crop material at the lateral ends of the header 112 towards the center of the header 112. At the center, the header 112 may include a feeder belt 120, in the form of a belt (for example) that conveys the crop material backwards towards a crop outlet 122. The header 112 also may include gauge wheels 124 or skids to control the height of the header 112 over the ground.

The header 112 is built on a frame 126, which is attached to the chassis 102 of the combine 100 by a feeder housing 128 (feederhouse). The feeder housing 128 is configured to convey crop material backwards from the header 112 to the threshing and separating system 106, as is known in the art. The feeder housing 128 may be movable by one or more feeder housing actuators 130 to raise and lower the header 112 relative to the ground.

The illustrated exemplary header 112 is a unitary header having a single frame 126 that extends continuously between the ends of the header 112 in the lateral direction L. The header 112 includes a center section and one or more wing sections extending from the center section. Those sections are fixedly connected together. In other embodiments, the header 112 may comprise a multi-segment or articulated header in which the wing sections are movably attached to the lateral end of the center section by pivots or linkages.

The header 112 also includes a number of supports 132 that extend forward from the frame 126 to hold parts such as the cutter bar 114, belts 118, or the like. The supports 132 may be rigidly attached to the header 112, or attached by movable mounts, such as pivots or linkages. In the case of movable supports 132, a suspension may be used to control the motion of the supports 132. For example, each support 132 may have its own spring and/or damper system, which is intended to allow the supports 132 to move up and down individually or in groups to follow local undulations along the lateral direction L. Skids, gauge wheels or other ground supports may be located below the supports 132 to generate a lifting force via contact with the ground. The positions of the ground supports and the spring and damping properties of the movable connections may be adjustable to tailor the header 112 for use in particular operating conditions. In addition, the positions of the supports 132, such as their angular orientation (downward tilt) relative to the frame 126 may be adjustable.

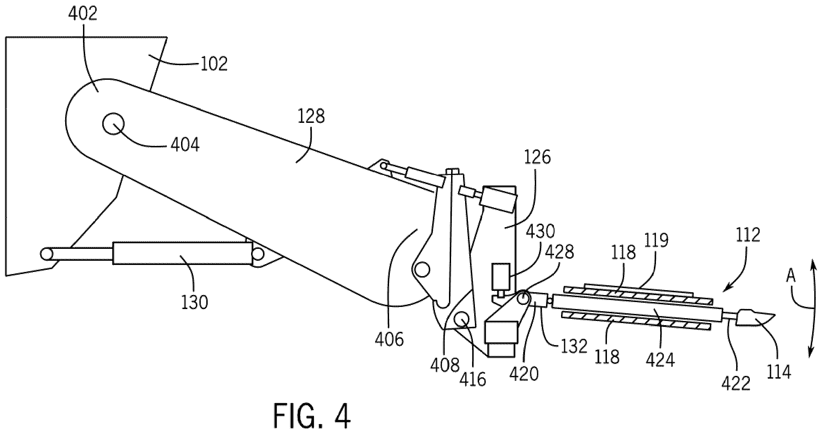

Referring to FIG. 4, the proximal end 402 of the feeder housing 128 is mounted to the chassis 102 at a pivoting joint 404, such as a hinge or trunnion, and the distal end of the feeder housing 128 is connected to the header 112. Feeder housing actuator 130 connects the feeder housing 128 to the chassis 102, and is operable to raise and lower the distal end 406 of the feeder housing 128 relative to the ground.

The header 112 includes an anchor plate 408 that is rigidly connected to the distal end 406 of the feeder housing 128. The frame 126 is pivotally connected to the anchor plate 408 by a frame pivot 416, such as one or more hinges or trunnion connections. In the shown example, the frame 126 has a plurality of supports 132 that extend from respective proximal ends 420 to respective distal ends 422 located forward of the frame in the forward direction F. Each support 132 is configured to support one or more operative components, such as a draper belt roller 424 or a portion of cutter bar 114.

The supports 132 may be rigidly connected to the frame 126 by welds or by being bolted in place. In the shown example, however, the proximal ends 420 of all of the supports 132 are movably mounted to the frame 126 to rotate about respective support pivots 428. Thus, the distal ends 422 of the supports 132 are movable in an arcuate path A relative to the frame 126. The angular positions of the supports 132 may be adjustable, such as by adjusting the state of extension of a pneumatic spring/damper 430, a hydraulic spring 430, a mechanical spring (e.g. torsion bar or coil spring) 430, or the like, or other adjusting mechanisms, as known in the art. The supports 132 may include any type of local suspension to control motion relative to the frame 126. For example, each support 132 may be mounted by a flexible mount such as a torsion link as described in U.S. Pat. No. 8,051,633. It will also be appreciated that one or more supports 132 may be fixed, while the remainder are movable relative to the frame 126. Some or all of the supports 132 also may be connected to each other, such as by cross-braces or the like. Other alternatives and variations will be apparent to persons of ordinary skill in the art in view of the present disclosure.

Each wing section includes at least two rollers 424. One belt 118 is wound about those two rollers 424. At least one of those rollers 424 may be driven by a motor to move belt 118 in an endless fashion. The other roller 424 may be an idler roller. Rollers 424 may either form part of a support 132 or be connected to a support 132, as shown in FIG. 4. Accordingly, rollers 424 can also move about arcuate path A along with supports 132. Alternatively, rollers 424 may not be connected to a support 132 at all, and rollers 424 may be held stationary relative to frame 126. It should be understood that the header is not limited to the illustration in FIG. 4.

Turning back to FIG. 3, the right-wing section of header 112 includes eight supports 132a-132h. Supports 132a and 132h, which are positioned at opposite ends of the right-wing section, each comprise rollers 424. Supports 132b-132g do not include rollers 424. For the supports 132b-132g that do not include a roller 424, the belt 118 rests on the upper surface of those support, as will be described hereinafter.

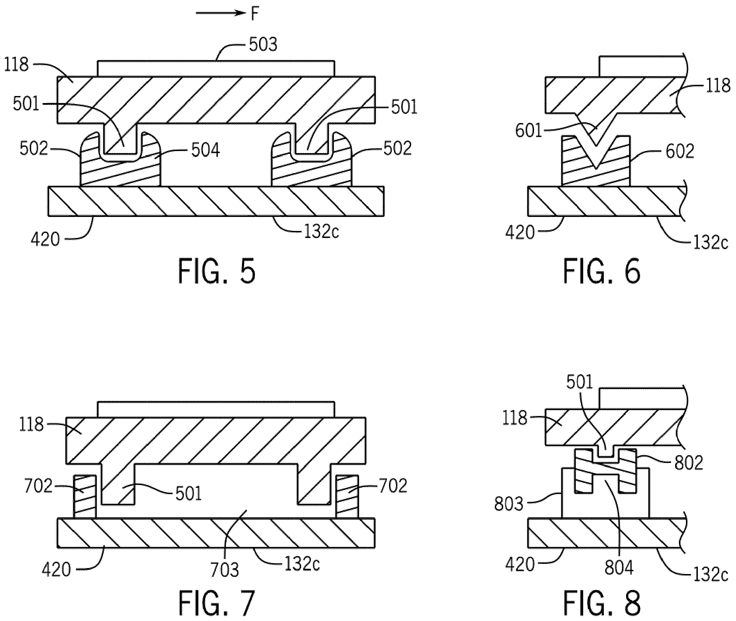

Turning now to FIGs. 3 and 5, to prevent belt 118 from inadvertently shifting in the fore-aft direction (F), the inner surface of belt 118 includes a projection 501 which may otherwise be referred to herein as a tooth or cleat. Projection 501 extends in the transverse direction (see direction L in FIG. 2) about the entire inner perimeter of belt 118. Projection 501 may have a square, rectangular, triangular or trapezoidal shape, as viewed in cross-section. Projection 501 may be integrated with belt 118, or it may be a separate component that is fixedly mounted to belt 118.

Projection 501 is slidably mounted within a channel 502 (or track) that is formed on a post 504. The post 504 is disposed the top surface of supports 132b-132g (support 132c is shown in FIG. 5). Each post 504 may be formed (e.g., molded or stamped) directly in its respective support 132. Alternatively, post 504 may be a block, or other device, that is mounted to the top surface of a support 132. The channel 502 has a shape, as viewed in cross-section, that is complimentary (or the same as) to the shape of projection 501. Thus, channel 502 may have a square, rectangular, triangular or trapezoidal shape, for example, as viewed in cross-section. Each support 132c-132g (optionally) includes two channels 502, i.e., one channel 502 that is nearer to distal end 422 of the support and one channel 502 that is nearer to the proximal end 420 of the support. Engagement between projections 501 and their channels 502 either prevent or limit belt 118 from shifting in the fore-aft direction F.

The top side of belt 119 can also include one or more cleats 503 extending from an outer surface of the draper belt 118 to reduce sliding of the crop on the draper belt 118. Each cleat 503 extends in the fore-aft direction F, and orthogonal to the direction (L) along which projection 501 continuously extends.

FIGs. 6-11 depict alternative embodiments of the belt arrangement. It should be understood that the details pertaining to FIG. 5 apply to each of those alternative embodiments, and only the differences therebetween will be described.

FIG. 6 depicts an embodiment like that shown in FIG. 5 with the exception that projection 601 and its mating channel 602 each have a triangular V-shape.

FIG. 7 depicts an embodiment like that shown in FIG. 5 with the exception that the support 132c includes two posts 702 and the channel 703 is disposed in the space between those two posts 702. The projections 501 are positioned between the two posts 702 and within the channel to constrain belt 118 in the fore-aft direction F.

FIG. 8 depicts an embodiment like that shown in FIG. 5 with the exception that an idler roller 802 is provided in lieu of a post having a channel. Roller 802 is mounted to support 132 by a bearing 803. Projection 501 of belt 118 is positioned within a channel 804 formed in roller 802. The interaction between projection 501 and channel 804 constrain belt 118 in the fore-aft direction F. Although not shown, a channel similar to channel 804 may be disposed on roller 424 for engaging with a projection on belt 118 to constrain belt 118 in the fore-aft direction F.

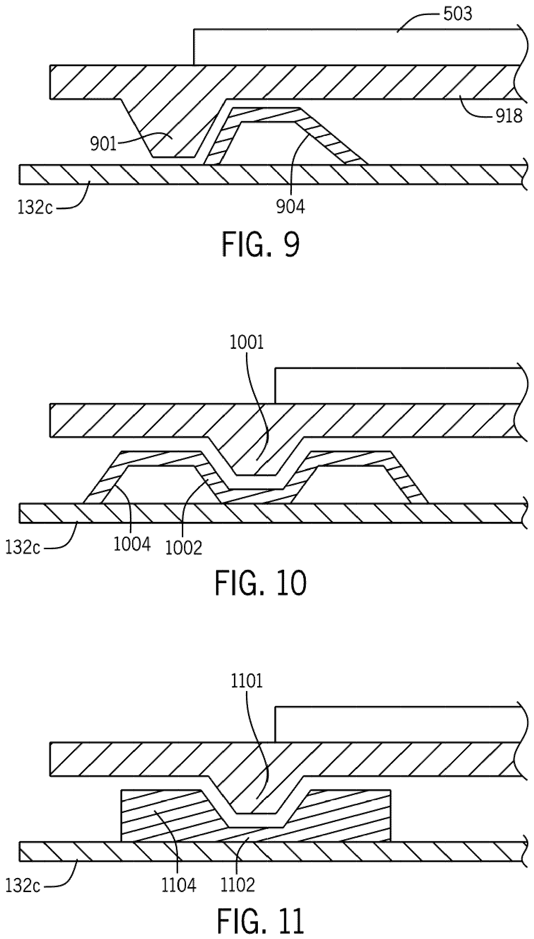

FIG. 9 depicts an embodiment like that shown in FIG. 7 with the exception that the support 132c includes one "v-guide" post 904 that is positioned interior of belt projection 901. A channel is disposed between the two posts 904 (one shown). Belt projection 901 has a 'u' or 'v' shape as viewed in a transverse direction. The angled surface of projection 901 is positioned adjacent the exterior facing angled surface of post 904. Post 904 may be a formed sheet metal member that is mounted to the top side of support 132c, or integrated with support 132c by way of a molding, casting or stamping operation.

FIG. 10 depicts an embodiment like that shown in FIG. 9 with the exception that the support post 1004 has an M-shape as viewed in a transverse direction. Belt projection 1001 is positioned within a central channel 1002 formed in post 1004. The central channel 1002 of post 1004 has angled walls facing each other, and angled walls of projection 1001 face those angled walls of post 1004.

FIG. 11 depicts an embodiment like that shown in FIG. 8 showing a belt projection 1101 disposed in a channel 1102 formed in a belt roller 1104 that is mounted to support 132c.

Although the projections, channels and posts have been described with reference to the lateral belt 118 on the right-wing second of header, it should be understood that the same projections, channels and posts may be provided on the left-wing section of the header, as well as the center section of the header.

The present disclosure describes a number of inventive features and/or combinations of features that may be used alone or in combination with each other or in combination with other technologies. The embodiments described herein are all exemplary, and are not intended to limit the scope of the claims. It will also be appreciated that the inventions described herein can be modified and adapted in various ways, and all such modifications and adaptations are intended to be included in the scope of this disclosure and the appended claims.

## Claims

1. A header (112) for an agricultural vehicle (100), said header comprising:
a frame (126);
a plurality of supports (132), each of the plurality of supports (132) extending from a respective proximal end at the frame (126) to a respective distal end located forward of the frame (126), wherein the header further comprises:
a channel (502, 602, 703, 804, 1002, 1102) that is either formed on or mounted to at least one of the supports (132);
a belt (118, 918) positioned over and on said plurality of supports (132), said belt defining at least one projection (501, 601, 901, 1001, 1101) that is positioned within the channel (502, 602, 703, 804, 1002, 1102) in order to constrain the belt (118, 918) in a fore to aft direction of the header (112).

2. The header of claim 1, wherein said at least one of the supports (132) does not include a roller (802).

3. The header of claim 1, wherein said at least one of the supports (132) does include a roller (802) mounted thereto, and the channel (804) is formed on the roller (802).

4. The header of claim 3, wherein the roller (802) is an idler roller.

5. The header of any one of the preceding claims, further comprising a cutter bar (114) mounted to the distal end of said at least one of the supports (132).

6. The header of any one of the preceding claims, wherein the channel (602) has a triangular shape, and a mating surface of the projection (601) also has a triangular shape.

7. The header of any one of claims 1-5, wherein the channel (502, 703) has a rectangular shape, and a mating surface of the projection (501) also has a rectangular shape.

8. The header of any one of the preceding claims, wherein said at least one of the supports (132) is pivotably mounted to the frame (126).

9. The header of any one of the preceding claims, wherein the belt (118, 918) comprises an inner facing surface and an outer facing surface, and wherein the projection (501, 601, 901, 1001, 1101) is disposed on the inner facing surface.

10. The header of claim 9 further comprising a plurality of cleats (503) disposed on the outer facing surface of the belt (118, 918) for directing crop material toward a feeder of the vehicle.

11. The header of any one of the preceding claims, wherein the projection (501, 601, 901, 1001, 1101) is elongated and extends in a lateral direction that is orthogonal to the fore to aft direction.

12. The header of any one of the preceding claims, wherein each of the supports (132) extends in the fore to aft direction.

13. The header of any one of the preceding claims, wherein the belt (118) includes two projections (501) and the support (132) includes two posts (702), wherein the channel (703) is defined between the two posts (702), and wherein the projections (501) are positioned between the two posts (702) to constrain the belt (118) in a fore to aft direction of the header.

14. An agricultural vehicle (100) comprising the header (112) of any one of the preceding claims.

15. The agricultural harvester (100) of claim 14, wherein the agricultural harvester (100) is a combine harvester (100).
